# EUROPÄISCHE PATENTANMELDUNG

(11) **EP 1 074 708 A1**
(43) Veröffentlichungstag der Anmeldung: **07.02.2001**
(21) Anmeldenummer: 99810558.9
(22) Anmeldetag: 25.06.1999
(51) Int. Cl.: F02C 7/224, F02C 7/25

(54) **Gas-Flüssigkeits-Trennapparat**

(71) Anmelder: ABB ALSTOM POWER (Schweiz) AG, 5401 Baden (CH)
(72) Erfinder: Blangetti, Francisco Dr., 5400 Baden (CH); Döhler, Stephan W.,Dr., 5413 Birmenstorf (CH); Schlageter, Rainer, 71120 Grafenhausen (DE)

(57) **Zusammenfassung**

Im Kühlwasserkreislauf zur Kühlung von komprimiertem Brenngas für eine Gasturbinenanlage ist ein Gas-Flüssigkeits-Trennapparat (4) geschaltet, welcher der Abscheidung von im Kühlwasser enthaltenem Brenngas aus dem Kühlwasser sowie der Messung des Gasgehalts dient. Der Behälter (11) des Apparats (4) ist durch eine Trennwand (14) in eine Wassereintrittskammer (15) und eine Wasseraustrittskammer (16) aufgeteilt. In der Wassereintrittskammer (15) wird der eintretende Kühlwasserstrom in einen nach oben und einen nach unten fliessenden Kühlwasserstrom aufgeteilt. Über dem Kühlwasser befindet sich ein Gaspolster (20), in das im Kühlwasser disperse Gasblasen entweichen und über eine Gasentnahmeleitung (5) zu einem Gasdetektor (6) gelangen. Das nach oben strömende Kühlwasser fliesst über ein Überlaufwehr (18), das nach unten strömende Kühlwasser durch Blenden (19) im unteren Bereich der Trennwand (14) in die Austrittskammer. Der Apparat (4) zeichnet sich insbesondere durch einen ruhigen, freien Wasserspiegel (17) in der Eintrittskammer (15) und eine drallfreie Strömung aus der Austrittskammer (16) aus.

## Beschreibung

### Technisches Gebiet

Die Erfindung betrifft eine Gasturbinenanlage, bei der ein verdichtetes brennbares Gas in einem Wärmetauscher gekühlt wird, wobei das für die Kühlung benötigte Kühlwasser in einem Kühlwasserkreislauf zirkuliert wird. Sie betrifft insbesondere einen Gas-Flüssigkeits-Trennapparat in dem betreffenden Kühlwasserkreislauf, welcher der Trennung und Messung des Gasgehalts im Kühlwasser und damit der Erhöhung der Betriebssicherheit der Anlage dient. Als Brenngas wird im folgenden ein gasförmiges Brenngas bezeichnet, wie zum Beispiel CH₄, C₂H₆, CO, H₂ usw., oder reiner Wasserstoff zwecks der Generatorkühlung.

### Stand der Technik

In solchen Gasturbinenanlagen wird komprimiertes Brenngas vor seiner Verbrennung zunächst mittels Wasser zwangskonvektiv gekühlt. Es wird hierzu durch die Rohre eines Wärmetauschers geleitet, welche von Kühlwasser umströmt werden. Das Kühlwasser wird mittels einer Förderpumpe durch einen Kühlwasserkreislauf gepumpt, der im wesentlichen aus der Förderpumpe, dem Wärmetauscher, einem Wasser-Wasserkühler und einem Gas-Flüssigkeits-Trennapparat besteht.

In dem Wärmetauscher zur Kühlung des Brenngases ist der Druck des Brenngases bedeutend höher als jener des Kühlwassers, sodass bei Leckagen das Brenngas in das Kühlwasser eintritt. Dadurch ergibt sich eine Zweiphasenströmung im Kühlwasserkreislauf, welche ein Sicherheitsrisiko für den Betrieb der Anlage darstellt. Zum Beispiel besteht bei einer Mischung mit Luft am Ansaugstutzen der Förderpumpe die Gefahr einer Entzündung oder Explosion. Ferner kann sie zu einem Trockenlaufen oder einer Kavitation der Förderpumpe führen. Deshalb ist es sehr wichtig, dass bei einer Rohrperforation oder gar einem Rohrbruch im Wärmetauscher eine Gasleck frühzeitig erkannt wird, um grössere Schäden an der Anlage zu vermeiden.
Um das Gefahrenrisiko einzuschränken, wird in dem Kühlwasserkreislauf nach dem Wärmetauscher ein Gas-Flüssigkeits-Trennapparat geschaltet, hier kurz Trennapparat genannt. Er dient der Ausscheidung von in dem Kühlwasser enthaltenen Gasen sowie der Messung des Gasgehalts. Es handelt sich dabei in erster Linie um Methan, Wasserstoff sowie auch weitere brennbare Gase. Hierfür werden die Gase über eine Gasentnahmeleitung einem Gasdetektor, zum Beispiel einem Massenspektrometer, zugeführt. Bei einer messbaren Gaskonzentration wird sodann eine entsprechende Warnung abgegeben, sodass notwendige Gegenmassnahmen unternommen werden können.

In herkömmlichen Trennaparaten, die gegenwärtig in Einsatz kommen, besitzen keinen definierten Wasserspiegel als freie Oberfläche im Apparat selber, an dem die im Wasser mitgetragenen Gasblasen entweichen und in die Gasentnahmeleitung gelangen könnten. Deshalb ist die Abscheidung und Detektion der Gasblasen nicht ausreichend gewährleistet, sodass eine Früherkennung einer Leckage nicht möglich ist.

### Darstellung der Erfindung

Angesichts des erwähnten Standes der Technik ist es die Aufgabe der Erfindung, einen Gas-Flüssigkeits-Trennapparat für einen Kühlwasserkreislauf einer Gasturbinenanlage zu schaffen, durch den die Abscheidung von Brenngas und/oder H₂ aus dem Kühlwasser derart verbessert ist, dass die Zuverlässigkeit der Gasgehaltsmessung erhöht und das Gefahrenrisiko für den Betrieb der Anlage reduziert ist.

Diese Aufgabe wird durch einen Gas-Flüssigkeits-Trennapparat für den Kühlwasserkreislauf einer Gasturbinenanlage gelöst, der einen Behälter mit einem Wassereinlauf und einem Wasserauslauf aufweist sowie eine Gasentnahmeleitung, die zu einem Gasdetektor führt. Der Apparat ist gemäss der Erfindung im Inneren seines Behälters durch eine Trennwand in eine Wassereintrittskammer und eine Wasseraustrittskammer aufgeteilt, welche hydraulisch miteinander verbunden sind, wobei in der Wassereintrittskammer der durch den Wassereinlauf eintretende Kühlwasserstrom in einen nach unten fliessenden und einen nach oben fliessenden Volumenstrom aufgeteilt ist. Beide Volumenströme fliessen von der Eintrittskammer in die Austrittskammer und von dort in den Wasserauslauf. Weiter weist der Behälter an seinem oberen Ende eine Leitung auf zur Zufuhr eines Gases in den Behälter, welches dort ein Gaspolster über dem Kühlwasser bildet, wodurch das Kühlwasser einen freien Wasserspiegel aufweist.

Die Aufteilung des Behältervolumens in eine Eintrittskammer und Austrittskammer bezweckt die Bildung einer Beruhigungsstrecke des Kühlwasserstroms in der Eintrittskammer und eine drallfreien Austritt des Kühlwassers aus der Austrittskammer. In der Eintrittskammer bildet sich eine ruhige, freie Oberfläche. An dieser Oberfläche können im Kühlwasser disperse Gasblasen aus dem Wasser in das darüberliegende Gaspolster entweichen. Ein drallfreier Austritt aus der Austrittskammer dient dazu, dass Gasblasen im Kühlwasser vermindert in den Wasserauslauf mitgerissen werden.

Der Kühlwasserstrom wird in der Eintrittskammer in einen kleineren nach unten und einen grösseren nach oben fliessenden Volumenstrom aufgeteilt. Diese Aufteilung der Strömung entsteht durch notwendige Öffnungen in der Trennwand im Bereich des Bodens des Apparates, welche eine hydraulische Verbindung zwischen den beiden Kammern und somit den hydrostatischen Druckausgleich bei Stillstand gewährleisten.
Die Öffnungen in der Trennwand sollen insbesondere so bemessen werden, dass die nach unten resultierende Wassergeschwindigkeit die Aufstiegsgeschwindigkeit der kleinsten zu trennenden Gasblasen nicht übersteigt. Der kritische Durchmesser dieser Gasblasen bei einer gewählten nach unten gerichteten Wassergeschwindigkeit von 0.0104 m/s ist 130 µm. Mit anderen Worten, bei dieser Auslegung werden alle Blasen, die grösser sind als 130 µm sind, nach oben und damit zur Erfassung gelangen.

Die hydraulische Verbindung der beiden Wasserkammern, nach der die beiden Volumenströme von der Eintrittskammer in die Austrittskammer gelangen, ist wie folgt realisiert.
Die Trennwand, welche die beiden Kammern voneinander trennt, ragt vom Boden des Behälters hinauf, erreicht jedoch das obere Ende des Behälters nicht, sodass zwischen dem oberen Rand der Trennwand und der Decke des Behälters ein freier Raum besteht. Das nach oben strömende Kühlwasser fliesst über den Rand der Trennwand in der Art eines Überlaufwehrs in die Austrittskammer.
An ihrem unteren Ende, im Bereich des Behälterbodens, weist die Trennwand Öffnungen auf, durch welche das nach unten strömende Kühlwasser in die Austrittskammer gelangt. Die Öffnungen sichern eine hydraulische Verbindung zwischen den beiden Kammern und ermöglichen die Steuerung der Strömungsteilung und des Wasserspiegels in der Eintrittskammer.
Die Grösse der Öffnungen wird gemäss der gewünschten Volumenaufteilung zwischen dem nach oben und nach unten fliessenden Kühlwasserstrom sowie gemäss den gewünschten Geschwindigkeiten für die beiden Kühlwasserströme bestimmt.

Der Wasserspiegel des Wehrs in der Eintrittskammer sowie das Wasserniveau in der Austrittskammer wird durch die Zufuhr eines Gases für das Gaspolster geregelt, wobei der Wasserspiegel in der Austrittskammer auf einer Höhe unter der Oberkante der Trennwand geregelt wird. Hierzu wird ein Ventil gemäss einem Sollwert für das Wasserniveau in der Austrittskammer geöffnet und geschlossen. Eine Änderung der Höhe dieses Wasserspiegels bewirkt eine Änderung des treibenden Druckgefälles für die Öffnungen und zugleich auch der Volumenstromaufteilung. Die für die Öffnungen wirksame Druckdifferenz ist dabei durch die Summe der Überlaufhöhe des Wehrs in der Eintrittskammer und der Niveauhöhe der Austrittskammer begrenzt.

Für den Fall einer plötzlichen Gasleckage weist der Behälter an seinem oberen Ende ein Sicherheitsventil auf, über welches Gas ins Freie entweichen kann, sodass der Behälterdruck in einem zulässigen Bereich bleibt.

In einer bevorzugten Ausführung des Apparates ist die Trennwand zwischen den beiden Kammern in einem horizontalen Querschnitt in einer V-form gewinkelt, wobei beide seitlichen Ränder der Trennwand mit der Behälterinnenwand dicht verbunden sind. Der kleinere, innere Winkel des V ist der Austrittskammer zugewandt, indem die innere Seite des V zusammen mit der Behälterinnenwand die Austrittskammer bildet . Der grössere, äussere Winkel des V ist der Eintrittskammer zugewandt, indem die äussere Seite des V zusammen mit der Behälterinnenwand die Eintrittskammer umschliesst.
Die Eintrittskammer besitzt also ein grösseres Volumen als die Austrittskammer. Dies ist von Vorteil, da die Trennung von Gas und Flüssigkeit hauptsächlich hier stattfindet. Ferner verleiht die V-Form der Trennwand eine erhöhte Festigkeit, sodass sie Stössen, wie zum Beispiel aufgrund von sogenanntem "water hammering", besser widerstehen kann.

Die Austrittskammer ist in einer bevorzugten Ausführung so dimensioniert, dass eine drallfreie Strömung in Richtung Wasserauslaufrohr erzielt wird.

Der Behälter weist ferner im Bereich des Behälterbodens einen Drainagestutzen zwecks einer Stillstandsentleerung auf.

Der Wasseraustritt ist in einer Ausführung durch ein U-Rohr realisiert, das an der Behälterwand angeordnet ist, wobei der eine Schenkel des U-Rohrs in die Austrittskammer ragt und der andere sich ausserhalb des Behälters befindet.

### Kurze Beschreibung der Zeichnungen

Es zeigen:
Figur 1 ein Schema eines Kühlwasserkreislaufes für eine Gasturbinenanlage mit einem Gas-Flüssigkeits-Trennapparat,
Figur 2a einen Gas-Flüssigkeits-Trennapparat gemäss der Erfindung,
Figur 2b einen horizontalen Querschnitt des Trennapparats von Figur 2a,
Figur 3 eine Darstellung der massgebenden Dimensionen des Überlaufwehrs von der Eintrittskammer zur Austrittskammer des Trennapparats.

### Weg der Ausführung der Erfindung

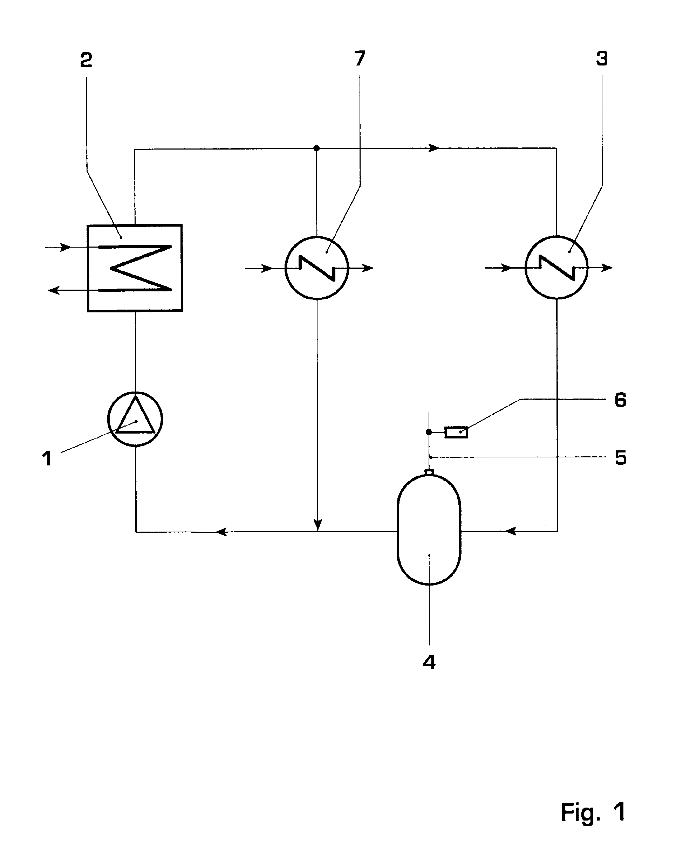

Figur 1 zeigt einen typischen Kühlwasserkreislauf, der im Stand der Technik sowie bei der vorliegenden Erfindung zur Kühlung von verdichtetem Brenngas und Wasserstoff für Generatorkühlung in einer Gasturbinenanlage eingesetzt wird. Das Kühlwasser wird mit Hilfe einer Förderpumpe 1 durch den Kreislauf gepumpt. Das Kühlwasser durchfliesst nach der Förderpumpe 1 zunächst einen ersten Wärmetauscher, nämlich einen Wasser-Wasserkühler 2, worin das Kühlwasser auf eine Temperatur gebracht wird, die zur Kühlung des Brenngases notwendig ist. Es wird sodann einem zweiten Wärmetauscher, einem wassergekühlten Erdgaswärmeübertrager 3, zugeführt, in dem es von Brenngas durchflossene Rohre umströmt, wodurch das Brenngas durch Zwangskonvektion gekühlt wird. Hier ist beispielsweise der Druck des Wassers 3-5 bar, jener des verdichteten Brenngases 20-50 bar. Aufgrund dieses Druckunterschieds können Leckagen von Brenngas in den Kühlwasserkreislauf entstehen, welche die eingangs erwähnten Sicherheitsrisiken für die Anlage bedeuten. Das Kühlwasser wird deshalb nach dem Erdgaswärmeübertrager 3 einem Gas-Flüssigkeits-Trennapparat 4, kurz Trennapparat, zugeführt. Dieser ist mit einer Gasentnahmeleitung 5 ausgerüstet, welche einen Teil des aus dem Kühlwasser abgeschiedenen Gases einem Gasdetektor 6 zuführt, welcher den Gasgehalt im Wasser feststellt. Sollte dieser Gasgehalt einen vorgegebenen Sicherheitswert überschreiten, wird eine entsprechende Meldung abgegeben, sodass Sicherheitsmassnahmen unternommen werden können.
Nach dem Trennapparat 4 fliesst das Kühlwasser zur Förderpumpe, wodurch der Kreislauf geschlossen ist. Dem Erdgaswärmeübertrager 3 können auch weitere Apparate parallel geschaltet werden, wie zum Beispiel ein Wärmetauschapparat 7 für die Kühlung des Wasserstoffs für den Generator der Gasturbinenanlage.

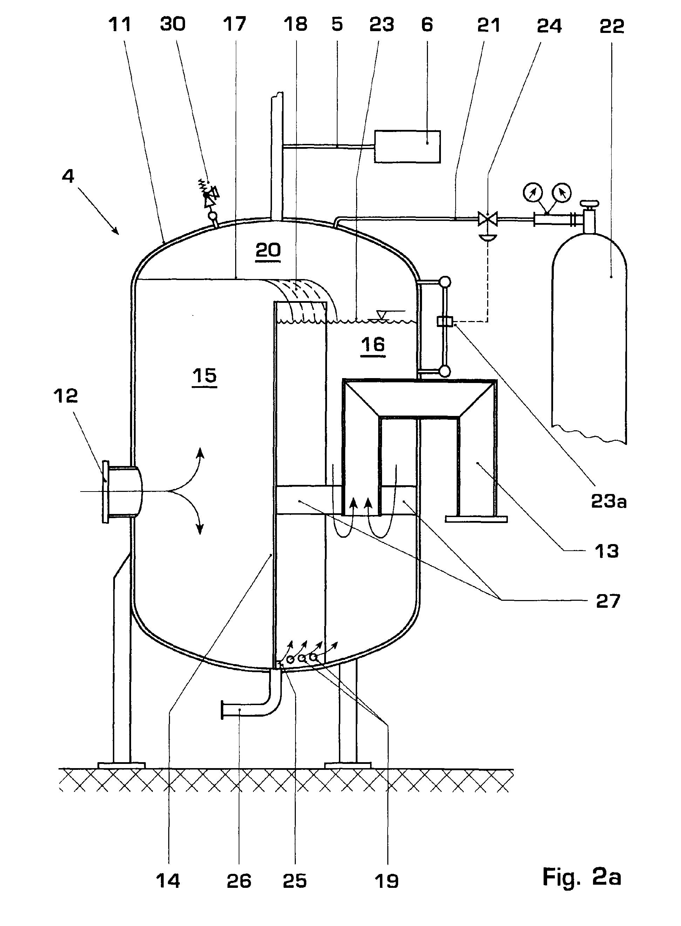

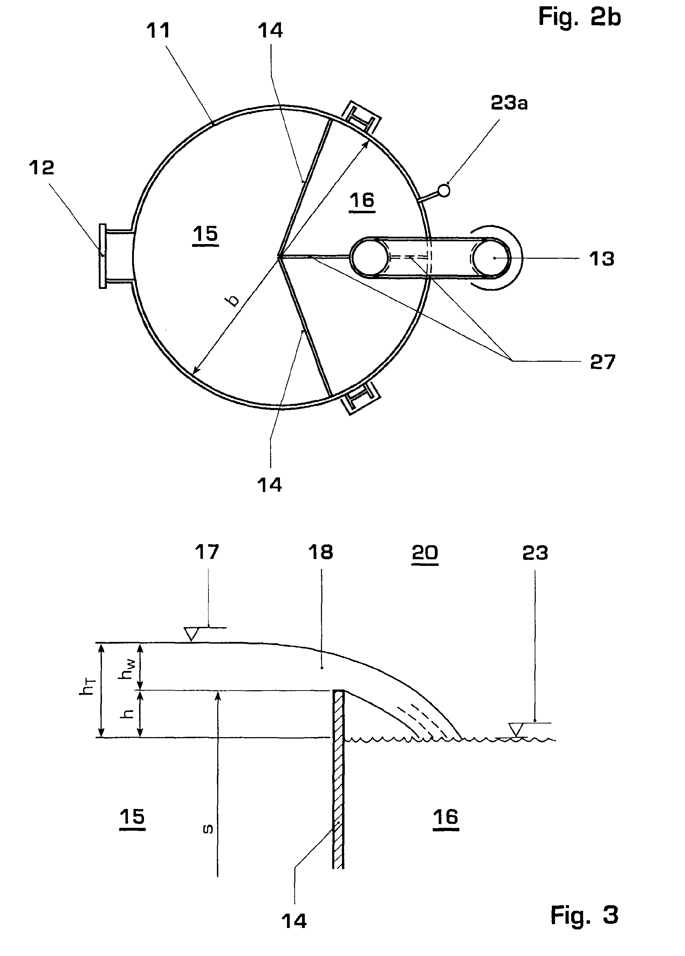

Figur 2a zeigt eine bevorzugte Ausführung des erfindungsgemässen Gas-Flüssigkeits-Trennapparates 4. Er besteht aus einem zylindrischen, senkrecht stehenden Behälter 11 mit einem seitlich angeordneten Wassereinlauf 12 und Wasserauslauf 13. Das Innere des Behälters 11 ist durch eine Trennwand 14 in zwei Kammern aufgeteilt, eine Wassereintrittskammer 15 und eine Wasseraustrittskammer 16. Die Trennwand 14 verläuft vom Boden des Behälters bis zu einer vorgegebenen Höhe, wobei sie die Decke des Behälters nicht berührt und ein freier Raum zwischen ihrem oberen Rand und der Decke verbleibt. Die Trennwand 14 besitzt ferner, wie in Figur 2b gezeigt, eine V-Form, wobei der äussere, grössere Winkel des V zusammen mit dem Mantel des Behälters 11 die Wassereintrittskammer 15 umfasst, und der innere, kleinere Winkel des V zusammen mit dem restlichen Mantel des Behälters 11 die Wasseraustrittskammer 16 umgibt. Die Trennwand 14 besitzt dank ihrer gewinkelten Form eine erhöhte Steifigkeit und kann Wasserstössen aus dem Wassereinlauf 12, sogenanntem "water hammering", besser widerstehen. Das Kühlwasser fliesst durch den Wassereinlauf 12 in die Eintrittskammer 15. Diese dient insbesondere als Beruhigungsstrecke. Ein grosser Anteil des Kühlwassers fliesst hier aufwärts, wobei sein Wasserspiegel 17 ruhig und glatt ist. Von dort fliesst es über den Rand der Trennwand 14 wie über ein Überlaufwehr 18 in die Austrittskammer 16. Der restliche, kleinere Anteil des Kühlwassers fliesst in der Eintrittskammer 15 abwärts und gelangt über mehrere Öffnungen oder Blenden 19, die nahe dem Boden des Behälters angeordnet sind, in die Austrittskammer 16. Die Blenden 19 sind beispielsweise durch einfache Bohrungen realisiert. Von dort verlässt das Kühlwasser den Trennapparat 4 über den Wasserauslauf 13.

Das in die Eintrittskammer 15 eingeflossene Kühlwasser steigt zum Beispiel zu einem Anteil von 80% aufwärts, während der kleinere Anteil von 20% nach unten strömt. Die Behälterdimensionen sind dabei so gewählt, dass die Aufstiegsgeschwindikgeit des Wassers beispielsweise 0.1 Meter pro Sekunde und die Geschwindigkeit des Kühlwasserstroms nach unten 0.015 Meter pro Sekunde nicht überschreitet. Hierfür besitzt der Behälter in einer Ausführung einen Durchmesser von 1.5 Meter, wobei die Trennwand 14 einen Winkel von 140° in der Austrittskammer und 220° in der Eintrittskammer aufweist. Diese Aufteilung der Winkel bezweckt, dass die Eintrittskammer mehr Raum umfasst, da dort auch die Gas-Flüssigkeitstrennung stattfindet.
In der Aufwärtsströmung des Kühlwassers in der Eintrittskammer werden darin verteilte Gasblasen mitgerissen, wobei diese sich mit einer Geschwindigkeit in bezug auf den Wasserstrom von 0.01 bis 0.25 Metern pro Sekunde aufwärts bewegen. Diese Relativgeschwindigkeit hängt von der Grösse der Gasblasen ab. Gasblasen mit einem Durchmesser von 1 Millimeter und mehr bewegen sich zum Beispiel mit einer Geschwindigkeit von 0.1 Metern pro Sekunde und mehr aufwärts. Kleinere Gasblasen steigen langsamer empor, während solche mit einem Durchmesser von ca. 0.1 Millimetern und einer Relativgeschwindigkeit von 0,015 Metern pro Sekunde im Gleichgewicht sind, da der abwärts fliessende Wasserstrom eine Geschwindigkeit von 0.015 Metern pro Sekunde nach unten besitzt. Noch kleinere Blasen werden mit dem Abwärtsstrom nach unten gerissen werden und durch die Blenden 19 in die Austrittskammer gelangen. Die Begrenzung der Abwärtsgeschwindigkeit begrenzt also zugleich die Grösse der nach unten mitgerissenen und dadurch nicht detektierten Gasblasen.
Die emporgestiegenen Gasblasen entweichen am ruhigen Wasserspiegel 17 in einen wasserfreien Raum 20. Dieser Raum 20 ist von einem Gas zum Beispiel durch Stickstoff, Kohlendioxid oder einem Inertgas gefüllt. Hierzu führt eine Gaszufuhrleitung 21 von einem Gasbehälter 22 zum Trennapparat 4. Die Gaszufuhr wird gemäss des Wasserniveaus 23 in der Austrittskammer 16 geregelt. Liegt das Wasserniveau 23 gemäss einem Niveaumessgerät 23a über einem vorgegebenen Sollwert, wird das Ventil 24 in der Gaszufuhrleitung 21 so lange geöffnet bis das Niveau auf den gewünschten Wert zurückgedrängt worden ist, wonach die Gaszufuhr durch Schliessen des Ventils 24 automatisch beendet wird. Das über der Oberfläche 17, 23 des Kühlwassers gebildete Gaspolster 20 umfasst vorzugsweise ungefähr einen Zehntel des Gesamtvolumens des Trennapparates 4. Ein sehr kleiner Anteil dieses Gaspolsters 20 wird dem Behälter 11 über die Gasentnahmeleitung 5 entnommen zwecks Bestimmung des Gasgehalts im Kühlwasser durch den Gasdetektor 6.
Wie erwähnt fliesst ein kleinerer Anteil, zum Beispiel 20% des Kühlwasserstroms in der Eintrittskammer 15 abwärts und durch die Blenden 19 in die Austrittskammer 16. Gasblasen mit einem Durchmesser von weniger als 0.1 Millimetern werden dabei mitgerissen, wobei diese für die Förderpumpe in der Regel kein Betriebsrisiko bedeuten.

Die Begrenzung der nach unten mitgerissenen Gasblasen ist entsprechend der Auslegung der Dimensionen des Apparates und des Volumens des Kühlwasserstroms. Andere Auslegungen des Apparates führen zu einer anderen Aufteilung und anderen Auf- und Abstiegsgeschwindigkeiten der Volumenströme und dadurch auch zu anderen Gasblasengrössen, die nicht detektiert werden. Insbesondere wird die Aufteilung der Volumenströme durch die Querschnittsfläche der Blenden 19 und das Wasserniveau 23 in der Austrittskammer 16 bestimmt.

Eine Auslegung des Trennapparates ist anhand von folgendem Beispiel dargestellt.
Ein Volumenstrom von 0.05 m³/s fliesst über den Wassereinlauf in den Apparat. Hiervon strömen 0.04 m³/s aufwärts und 0.01 m³/s abwärts mit Geschwindigkeiten von ungefähr 0.04 m/s nach oben bzw. 0.01 m/s nach unten. Aus Berechnungen beispielsweise nach W.J. Beek und M.K. Muttzall: Transport Phenomena, S. 101/106, Wiley and Sons (1975) ergibt sich, dass Gasblasen mit einem Durchmesser kleiner als 0.130 Millimeter nach unten mitgerissen werden.
Die Dimensionen des Überlaufwehrs und der Blenden können nun beispielsweise nach W. Bohl: Technische Strömungslehre, S. 203-232, Vogel-Handbuch (1982) 5. Auflage bestimmt werden, wobei die dazugehörigen Grössen in Figur 3 dargestellt sind. Die Aufstiegsgeschwindigkeit des Volumenstroms nach oben uᵤₚ verhält sich zum Reibungswert y des Wehrs, der Überlaufbreite b (gleich dem Durchmesser des Behälters) und der Höhe des Überlaufwehrs h_{w} gemäss Uᵤₚ ∝ y · b · (h_{w})^{3/2}, wobei y wiederum eine Funktion von h_{w} und der Gesamthöhe s der Trennwand ist.
Für die Querschnittsfläche A der Blenden gilt schliesslich die Beziehung zur Geschwindigkeit u_{down} des abwärts fliessenden Volumenstroms gemäss u_{down} = d · A · (konstante · h_{T})^{1/2} , wobei d der Durchflusskoeffizient der Blende ist. Gemäss Figur 3 ist die Grösse h_{T}, also die Höhe des Wasserspiegels in der Eintrittskammer über dem Wasserniveau in der Austrittskammer, gleich der Summe aus der Höhe des Überlaufwehrs h_{w} und der Höhe h der Trennwand über dem Wasserniveau in der Austrittskammer.
Aus einer Auslegung nach dieser Art ergibt sich bei einem Behälterdurchmesser oder einer Überlaufbreite b von 1.5 Metern eine Überlaufhöhe des Wehrs h_{w} von 0.06 Metern, eine Höhe h von 0.05 Metern und eine Querschnittsfläche der Blenden von 0.013 m². Dabei ist zu bemerken, dass Variationen des Volumenstroms von 30% diese berechneten Parameterwerte wenig ändern.

Schliesslich ist am Boden des Behälters eine Öffnung 25, welche in einen Drainagestutzen 26 mündet zwecks einer Stillstandsentleerung des Behälters dient.
Der Wasserauslauf 13 in der Austrittskammer 16 ist in der Form eines U-Rohrs, wovon der eine Schenkel im Innern des Behälters mittels zwei
Befestigungsplatten 27 mit der Trennwand 14 und der inneren Wand des Behälters 11 verschweisst ist. Die Befestigungsplatten dienen einerseits der Festigkeit im Fall eines "water hammering" und anderseits der Strömungsführung in den Wasserauslauf 13.
Die Austrittskammer ist weiter so ausgelegt, dass in ihr kein Drall entsteht. Hierzu wird der hydraulische Durchmesser dₕ der Austrittskammer mit Hilfe der Froude-Zahl Fr und der Auslaufgeschwindigkeit uₒᵤₜ des Kühlwassers aus der Kammer bestimmt, wobei Fr = uₒᵤₜ / (g · dₕ)^{1/2} und g die Erdbeschleunigung ist. Die Grösse dₕ bedeutet hier der hydraulische Durchmesser der Austrittskammer, welcher durch dₕ = 4 · A_{g} /Pₑ gegeben ist, wobei A_{g} die Querschnittsfläche der Austrittskammer und Pₑ der benetzte Umfang der Austrittskammer ist.

### Bezugszeichenliste

- 1: Förderpumpe
- 2: Wasser-Wasserkühler
- 3: wassergekühlter Erdgaswärmeübertrager
- 4: Gas-Flüssigkeits-Trennapparat
- 5: Gasentnahmeleitung
- 6: Gasdetektor
- 7: weiterer Wärmetauscher für Kühlung
- 11: Behälter
- 12: Wassereinlauf
- 13: Wasserauslauf
- 14: Trennwand
- 15: Wassereintrittskammer
- 16: Wasseraustrittskammer
- 17: Wasserspiegel in Eintrittskammer
- 18: Überlaufwehr
- 19: Blenden, Öffnungen
- 20: wasserfreier Raum, Gaspolster
- 21: Gaszufuhrleitung
- 22: Gasbehälter
- 23: Wasserniveau in Wasseraustrittskammer
- 23a: Niveaumessgerät
- 24: Ventil
- 25: Öffnung für Drainage
- 26: Drainagestutzen
- 27: Befestigungsplatten
- 30: Sicherheitsventil

- s: Höhe der Trennwand
- h: Höhe der Trennwand über dem Wasserniveau in er Austrittskammer
- h_{w}: Höhe des Überlaufwehrs
- h_{T}: Höhe des Wasserspiegels in der Eintrittskammer über dem in der Austrittskammer

## Patentansprüche

1. Gas-Flüssigkeits-Trennapparat (4), der in einem Kühlwasserkreislauf einer Gasturbinenanlage geschaltet ist, bei der komprimiertes Brenngas mittels Kühlwasser vom Kühlwasserkreislauf gekühlt wird,
mit einem Behälter (11), einem Wassereinlauf (12), einem Wasserauslauf (13) und einer Gasentnahmeleitung (5), die zu einem Gasdetektor (6) führt,
dadurch gekennzeichnet, dass
der Behälter des Trennapparats (4) in seinem Inneren durch eine Trennwand (14) in eine Wassereintrittskammer (15) und eine Wasseraustrittskammer (16) aufgeteilt ist, wobei zwischen den beiden Wasserkammern (15, 16) hydraulische Verbindungen bestehen,
und in der Wassereintrittskammer (15) ein durch den Wassereinlauf (12) hineinfliessender Kühlwasserstrom in einen nach oben strömenden Kühlwasserstrom und einen nach unten strömenden Kühlwasserstrom aufgeteilt wird,
wobei die nach unten und nach oben strömenden Kühlwasserströme über die hydraulischen Verbindungen in die Wasseraustrittskammer (16) und von dort in den Wasserauslauf (13) fliessen,
und der Trennapparat (4) an seinem oberen Ende eine Leitung (21) aufweist für die Zufuhr von Gas, welches über dem Kühlwasser im Behälter (11) ein Gaspolster (20) und einen freien Kühlwasserspiegel (17, 23) bildet.

2. Gas-Flüssigkeits-Trennapparat (4) nach Anspruch 1,
dadurch gekennzeichnet, dass
die Trennwand (14) in ihrem unteren Bereich Öffnungen (19) aufweist, durch welche der nach unten strömende Kühlwasserstrom in die Austrittskammer (16) fliesst,
und die Trennwand (14) vom Boden des Behälters des Trennapparats (4) hinaufragt, wobei zwischen dem oberen Rand der Trennwand (14) und der Decke des Behälters (11) ein freier Raum besteht, und der nach oben strömende Kühlwasserstrom über den oberen Rand der Trennwand (14) gleich einem Überlaufwehr (18) von der Eintrittskammer (15) in die Austrittskammer (16) fliesst.

3. Gas-Flüssigkeits-Trennapparat (4) nach Anspruch 2,
dadurch gekennzeichnet, dass
die Aufteilung des Volumens des in die Eintrittskammer (15) fliessenden Kühlwasserstroms in einen nach unten und nach oben strömenden Kühlwasserstrom sowie die Geschwindigkeiten dieser beiden Kühlwasserströme durch die Querschnittsfläche der Blenden (19) und das Niveau des Wasserspiegels (23) in der Austrittskammer (16) bestimmt ist.

4. Gas-Flüssigkeits-Trennapparat (4) nach Anspruch 3,
dadurch gekennzeichnet, dass
das Wasserniveau (23) in der Austrittskammer (16) durch die Zufuhr von Gas mittels einem Ventil (24) in einer Gaszufuhrleitung (21) und einem Wasserniveaumessgerät (23a) geregelt ist.

5. Gas-Flüssigkeits-Trennapparat (4) nach Anspruch 4,
dadurch gekennzeichnet, dass
die Trennwand (14) in ihrem horizontalen Querschnitt eine V-Form aufweist, wobei die innere Wand der V-Form zusammen mit der Innenwand des Behälters (11) des Trennapparats (4) die Austrittskammer (16) bildet und die äussere Wand der V-Form zusammen mit der Innenwand des Behälters (11) des Trennapparats (4) die Eintrittskammer (15) bildet.

6. Gas-Flüssigkeits-Trennapparat (4) nach Anspruch 5,
dadurch gekennzeichnet, dass
an dem Behälter (11) des Gas-Flüssigkeits-Trennapparats (4) ein Sicherheitsventil (30) zur Regelung des Behälterdrucks angeordnet ist.

7. Gas-Flüssigkeits-Trennapparat (4) nach Anspruch 6,
dadurch gekennzeichnet, dass
im Bereich des Bodens des Behälters (11) eine Öffnung (25) und ein Drainagestutzen (26) zur Entleerung des Gas-Flüssigkeits-Trennapparats (4) angeordnet ist.

8. Gas-Flüssigkeits-Trennapparat (4) nach Anspruch 7,
dadurch gekennzeichnet, dass
der Wasserauslauf (13) aus einem U-Rohr besteht, wobei der erste Schenkel im Innern des Behälters (11) und der zweite Schenkel ausserhalb des Behälters (11) angeordnet ist.

9. Gas-Flüssigkeits-Trennapparat (4) nach Anspruch 8,
dadurch gekennzeichnet, dass
in der Austrittskammer (16) Platten (27) angeordnet sind zur Befestigung des U-Rohrs des Wasserauslaufs (13) an der inneren Wand des Behälters (11) und an der Trennwand (14) sowie zur Führung des Kühlwasserstroms in das U-Rohr.
